# EUROPEAN PATENT APPLICATION

(11) **EP 4 749 570 A1**
(43) Date of publication of application: **27.05.2026**
(21) Application number: 24215212.2
(22) Date of filing: 25.11.2024
(51) Int. Cl.: G06T 7/246

(54) **METHODS AND SYSTEMS FOR SCENE FLOW ESTIMATION**

(71) Applicant: Aptiv Technologies AG, 8200 Schaffhausen (CH)
(72) Inventor: SPATA, Dominic, 58454 Witten (DE); BRAUN, Marco, 40225 Düsseldorf (DE); MEUTER, Mirko, 40699 Erkrath (DE)
(74) Representative: Manitz Finsterwald Patent- und Rechtsanwaltspartnerschaft mbB

(57) **Abstract**

A computer implemented method for scene flow estimation includes: determining a plurality of point detections at a present point of time based on sensor data from a sensor, each of the point detections including a coordinate vector and a point feature vector; sampling a first point feature grid vector for each point detection based on a first feature grid; estimating a previous point detection for each point detection at a previous point of time using a preliminary scene flow; sampling a second point feature grid vector for each previous point detection based on a second feature grid; determining a fused point feature vector for each point detection based on the point feature vector, the first point feature grid vector and the second point feature grid vector; and determining a scene flow for each point detection based on the respective fused point feature vector.

## Description

### FIELD

The present disclosure relates to methods and systems for scene flow estimation.

### BACKGROUND

There exist various approaches for estimating of a scene flow for points of a point cloud captured by a sensor, wherein the scene flow may describe a movement of the points over time. The scene flow may be predicted by using a pair of point clouds from consecutive time points as input. For example, some approaches rely on a form of grouping or clustering such as k-nearest neighbor searches to process information in a spatial local neighborhood of a point of the point cloud.

While these approaches may deliver good results, they are costly in terms of runtime and often difficult to implement in embedded hardware.

Accordingly, there is a need to improve a method for estimating a scene flow in that the method is easier to integrate in a production environment.

### SUMMARY

The present disclosure provides a computer implemented method, a computer system and a non-transitory computer readable medium according to the independent claims. Embodiments are given in the subclaims, the description and the drawings.

In one aspect, the present disclosure is directed at a computer implemented method for scene flow estimation. The method comprises the following steps performed (in other words: carried out) by computer hardware components: determining a plurality of point detections at a present point of time based on sensor data from a sensor, each of the point detections comprising a coordinate vector and a point feature vector; sampling a first point feature grid vector for each point detection of the plurality of point detections based on a first feature grid; estimating a previous point detection for each point detection of the plurality of point detections at a previous point of time using a preliminary scene flow; sampling a second point feature grid vector for each previous point detection based on a second feature grid; determining a fused point feature vector for each point detection of the plurality of point detections based on the point feature vector, the first point feature grid vector of the respective point detection and the second point feature grid vector of the respective previous point detection; and determining a scene flow for each point detection of the plurality of point detections based on the respective fused point feature vector.

In other words, the computer implemented method for scene flow estimation may not use direct point-to-point information exchange over time for each point detection, and thus no grouping or clustering of the plurality of point detections may be required. Instead, the point detections may interact with the feature grids within a neural network via "scatter" and "gather" operations as will be described further below.

A scene flow may be a displacement vector for each point detection of a point cloud comprising the plurality of point detections. In particular, the scene flow may describe a movement forward in time of each point detection of the point cloud. However, the scene flow may also describe a movement backward in time of each point detection of the point cloud by an additive inverse of the movement forward in time.

The method for scene flow estimation may be performed or carried out using a neural network, for example, a convolutional neural network (CNN). In particular, the method may be performed by a layer (also may be called as a flow layer) of the neural network. The flow layer or a plurality of flow layers may be inserted in an up-sampling portion of the neural network to determine the scene flow for each point detection of the plurality of point detections. The neural network used for estimating a scene flow may be trained end-to-end. The training of the neural network may use standard losses for scene flow estimation, in particular self-supervised losses or super-vised losses with labels derived from an auxiliary sensor.

The plurality of point detections may be determined at a present point of time based on sensor data. The plurality of point detections may represent objects in an environment of a vehicle. The sensor data may be captured by a sensor mounted on the vehicle. It will be understood that the vehicle may comprise further sensors and the plurality of point detections may be determined based on sensor data of the further sensors. The sensor may be a radar sensor or a LIDAR sensor.

In particular, the sensor may be a radar sensor and the sensor data may be an output of the radar sensor. The radar sensor may be a series radar sensor or a standard radar sensor typically used in vehicles. The radar sensor may transmit electromagnetic signals in the environment of the vehicle and receive electromagnetic signals reflected from the objects in the environment of the vehicle. The environment of the vehicle may be represented using a grid including a plurality of cells, wherein an object may be detected within a cell of the grid based on the sensor data.

The sensor data may be received by the radar sensor in a frame, wherein the frame may describe a group of sensor data which is captured in a short period of time, and aggregated together to create a snapshot representing a single moment of time or a present point of time. Thus, point detections determined at a present point of time or at a single moment of time may be point detections determined in a frame.

The first feature grid may include point features, for example, a range, a range rate, an azimuth angle, or the like for each point detection of the plurality of point detections. The first feature grid may be generated with any number of layers of the neural network. The neural network may be a recurrent neural network. Thus, the first feature grid may include past information captured prior to the present point of time for each point detection of the plurality of point detections. It is understood that the point features may be abstract features generated from at least one layer of the neural network. The first feature grid may include features extracted from a current scan of the sensor, wherein the features are provided in a grid representation.

The first point feature grid vector may define a vector to a cell of the first feature grid which comprises a selected point feature of a point detection from the plurality of point detections. The cell of the first feature grid may assign only one first point feature grid vector. The selected point feature may be predetermined. It is understood that a plurality of point features may be evaluated for the scene flow estimation of each point detection of the plurality of point detections. The scene flow may be determined using a plurality of first feature grids, each of which applies to a point feature of the point detections. Additionally or alternatively, the scene flow may be determined based on a series of first feature grids that may increase in resolution.

The previous point detection for each point detection at the present point of time may be estimated using a preliminary scene flow that may describe a movement of the respective point detection from a previous point of time to the present point of time. The preliminary scene flow may be based on an initial guess, wherein the initial guess may be zero, i.e. the previous point detection at the previous point of time may correspond to the respective point detection at the present point of time.

The previous point of time may be immediately before the present point of time (in other words: no further point of time is between the previous point of time and the present point of time). It will be understood that a discrete sequence of points of time may be used, for example equidistant points of time, for example a point of time every pre-determined amount of seconds, for example every second, or every 1/10 of a second (i.e. 100 ms), or the like. Alternatively, the previous point of time may be a point of time not directly before the present point of time.

The preliminary scene flow may be a scene flow determined at a previous point of time using the method for scene flow estimation as described herein. Thus, the method may be carried out iteratively such that the scene flow determined by using the method at a present point of time may be input to the method as the preliminary scene flow for determining an updated scene flow at a next point of time. This may lead to a refinement of the scene flow.

The second point feature grid vector may be determined in the same way as the first point feature grid vector, but based on the estimated previous point detection and the second feature grid. Therefore, the second feature grid may include the point features for each previous point detection or each point detection of the plurality of point detections at the previous point of time. The second feature grid may be generated with any number of layers of the neural network at the previous point of time based on sensor data at the previous point of time. The second feature grid may also be called a hidden state grid of the neural network. The features of the second feature grid may be provided in a grid representation. Thus, the second point feature grid vector may define a vector to a cell of the second feature grid which comprises the selected point feature of the previous point detection at the previous point of time. The cell of the second feature grid may assign only one second point feature grid vector.

The coordinate vector of each point detection may describe a location of the respective point detection in a vehicle coordinate system. The point feature vector may include a plurality of point features of the respective point detection. The point feature vector may include a range rate, an azimuth, or a distance of the respective point detection. The point feature vector may be a vector including learned or measured point features, in particular abstract features generated from at least one layer of a neural network. The point feature vector may include a plurality of point features.

According to an embodiment, the first feature grid comprises point features extracted from the sensor data of the sensor at the present point of time. The point features may be provided in a grid representation. The point detections at the present point of time may be spatially aligned with the first feature grid at the present point of time. The first feature grid may represent point features of the plurality of points at the present point of time, in particular point features of point detections determined by a current scan of the sensor. However, the point detections at the present point of time may not be spatially aligned with the second feature grid representing point features of a previous scan at the previous point of time.

According to an embodiment, the second feature grid comprises point features of each previous point detection of the plurality of point detections at the previous point of time. The point features may be provided in a grid representation. The previous point detections may be approximately spatially aligned with the second feature grid. The second feature grid may represent previous point features of the plurality of previous points at the previous point of time, in particular, point features of previous point detections estimated from the point detections at the present point of time. The previous point detections at the previous point of time may not be spatially aligned with the first feature grid representing point features of the current scan at the present point of time.

According to an embodiment, the respective first point feature grid vector of the respective point detection is sampled based on the coordinate vector of the respective point detection and the first feature grid of one point feature of the respective point detection. The point feature may be a selected point feature of a plurality of point features of the point feature vector. The plurality of point features may include learned or measured point features of the respective point detection. The first point feature grid vector may define a vector to a cell of the first feature grid which comprises the selected point feature of the respective point detection from the plurality of point detections. The sampled grid cell of the first feature grid may be determined using the coordinate vector of the respective point detection.

According to an embodiment, the method further comprising determining the first feature grid based on the sensor data from the sensor captured at the present point of time using a neural network. In particular, the first feature grid may be determined using a layer of the neural network. The neuronal network may be a convolutional neural network (CNN). The neural network may be a recurrent neural network (RNN).

According to an embodiment, the method further comprising determining the second feature grid at the previous point of time based on the sensor data from the sensor captured at the previous point of time using the neural network. The neural network may be the same neural network that is used for determining the first feature grid. In particular, the second feature grid may be determined using the same layer of the neural network that is used for determining the first feature grid. It is understood, that the second feature grid may be the first feature grid at the previous point of time.

According to an embodiment, the method further comprising determining a first offset vector for each point detection of the plurality of point detections based on the first point feature grid vector.

According to an embodiment, the respective first offset vector of the respective point detection is determined by adding a first offset to the first point feature grid vector of each respective point detection of the plurality of point detections. The first offset may be an offset between a sampled grid cell center of the first point feature grid vector and the coordinate vector of the respective point detection. The respective first offset vector may be a refined first point feature grid vector of the respective first point feature grid vector.

According to an embodiment, the respective previous point detection comprises an estimated coordinate vector of each respective point detection of the plurality of point detections at the previous point in time. The respective previous point detection may be called a warped point detection at the previous point of time from the respective point detection at the present point of time. The plurality of previous point detections may form a point cloud of the plurality of point detections at the previous point of time. The estimated coordinate vector of each respective previous point detection may describe a location of the respective previous point detection in the vehicle coordinate system. The respective previous point detection for each point detection may be determined by subtracting a displacement vector obtained from the preliminary scene flow of the corresponding point detection at the present point of time from the coordinate vector of the corresponding point detection at the present point of time.

According to an embodiment, the respective second point feature grid vector for each of the previous point detections is sampled based on the estimated coordinate vector of the respective previous point detection and the second feature grid. The second point feature grid vector may define a vector to a cell of the second feature grid which comprises the selected point feature of the respective previous point detection from the plurality of previous point detections. The sampled grid cell of the second feature grid may be determined using the estimated coordinate vector of the respective previous point detection.

According to an embodiment, the method further comprising determining a second offset vector for each previous point detection based on the second point feature grid vector.

According to an embodiment, the respective second offset vector of the respective previous point detection is determined by adding a second offset to the second point feature grid vector of each respective previous point detection of the plurality of point detections. The second offset may be an offset between a sampled grid cell center of the second point feature grid vector and the estimated coordinate vector of the respective previous point detection. The respective second offset vector may be a refined second point feature grid vector of the respective second point feature grid vector.

According to an embodiment, the preliminary scene flow comprises a displacement vector for each point detection of the plurality of point detections. The preliminary scene flow may be a current estimate of a movement of the respective point detection from the previous point of time to the present point of time. The preliminary scene flow may be a predetermined initial guess or the scene flow determined at the previous point of time.

According to an embodiment, the method further comprising embedding the respective fused point feature vector of each point detection into the first feature grid using the coordinate vector of each respective point detection of the plurality of point detections.

According to an embodiment, the method further comprising compressing the respective embedded fused point feature vector and the first point feature grid vector of the respective point detection into a compressed feature vector using a symmetric reduction function for each point detection of the plurality of point detections. The compressed feature vector for each point detection at the present point of time may therefore be determined based on the first point feature grid vector of the respective point detection and the embedded fused point feature vector.

According to an embodiment, the method further comprising determining an updated second feature grid based on a plurality of the compressed feature vectors. The updated second feature grid may be determined at the present point of time based on the first feature grid at the present point of time and the plurality of embedded and compressed fused point feature vectors at the present point of time. A cell of the updated second feature grid may assign one or more point feature grid vectors.

In another aspect, the present disclosure is directed at a computer system, said computer system comprising a plurality of computer hardware components configured to carry out several or all steps of the computer implemented method described herein. The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system described herein and a sensor, wherein the input data is determined based on an output of the sensor. The sensor may be a radar system and/or a LIDAR system.

The vehicle can be a car or truck and the sensor may be mounted on the vehicle. The sensor may be directed to an area in front or in the rear or at a side of the vehicle. Sensor data may be captured by the sensor when the vehicle is moving.

In another aspect, the present disclosure is directed at a non-transitory computer readable medium comprising instructions for carrying out several or all steps or aspects of the computer implemented methods described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented methods described herein.

It is understood that features described in connection with the methods can be realized in the computer system as well as the non-transitory computer readable medium and vice versa.

### DRAWINGS

Exemplary embodiments and functions of the present disclosure are described herein in conjunction with the following drawings, showing schematically:
- Fig. 1: a layer of a neural network according to an embodiment;
- Fig. 2: an example implementation of the layer in the neural network;
- Fig. 3: a flow diagram illustrating a method for scene flow estimation according to various embodiments; and
- Fig. 4: a computer system with a plurality of computer hardware components configured to carry out steps of a computer implemented method for scene flow estimation according to various embodiments.

### DETAILED DESCRIPTION

According to extensive safety requirements for autonomous driving systems or driver assistance functions, it may be quite important to detect objects and their movement in an environment of a vehicle. A reliable object detection and, in particular, a reliable scene flow estimation of moving objects in the environment of an autonomous vehicle may therefore be an essential task. The scene flow of moving objects in the environment of an autonomous vehicle may be used to steer the autonomous vehicle safely or to control components of autonomous driving systems or driver assistance functions.

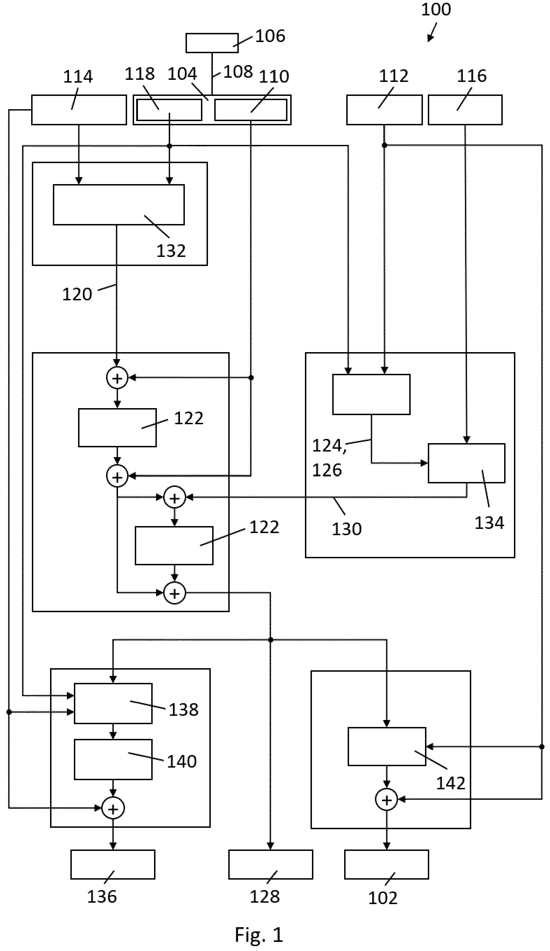

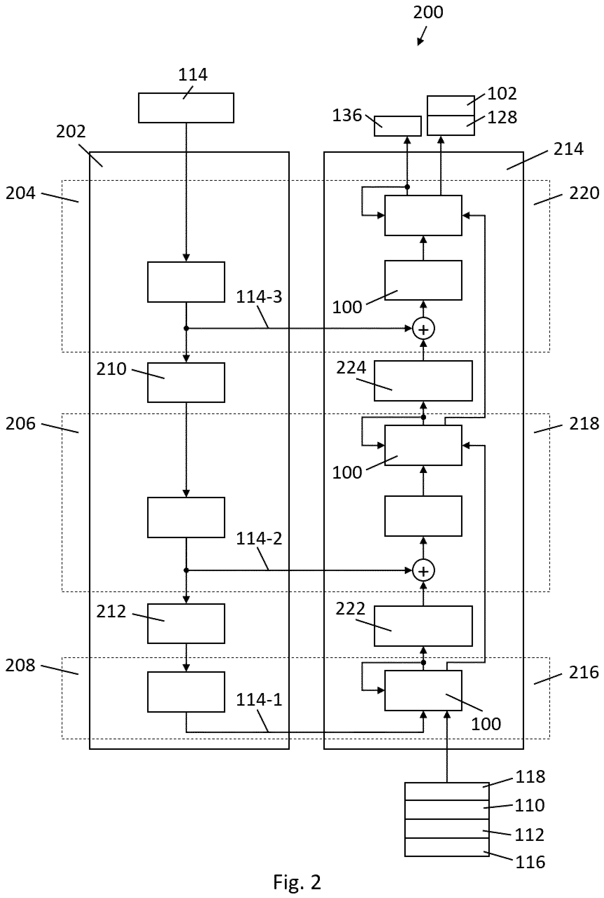

Fig. 1 shows a layer 100 of a neural network configured to perform or carry out a method for scene flow estimation according to an embodiment. The layer 100 or an architecture of the layer 100 may be attached to a standard convolutional neural network (CNN) as will be shown and described in more detail in Fig. 2. The layer 100 may exploit spatial correlations learned at a grid-level to provide necessary information to predict a scene flow 102 on point-level.

The scene flow 102 may be a displacement vector for each point of a point cloud, wherein the displacement vector describes a movement of a point of the point cloud over time. The point cloud may include a plurality of point detections 104 detected from sensor data 108 of a sensor 106, wherein each point detection 104 may correspond to a point of the point cloud. The sensor 106 may be a radar sensor or a LIDAR sensor mounted on a vehicle. The point detections 104 may represent objects in an environment of the vehicle.

More concretely, the point detections 104, features of the point detections 104 (in other words: point features), and a preliminary scene flow 112 may be used to mediate an information exchange between a past feature grid at a previous point of time and a current feature grid at a present point of time in a recurrent manner, thereby enriching the point features with data relating to the spatial misalignment of the grid contents. That data may then be used to determine a new, refined scene flow 102 in a manner that can be trained end-to-end.

The method for scene flow estimation as described herein may utilize any number of instances of a recurrent neural network layer. The layer 100 may have four input parameters: the plurality of point detections 104, a first feature grid 114, a second feature grid 116, and the preliminary scene flow 112.

The plurality of point detections 104 from the most recent scan, i.e. a current scan of the sensor 106 may form a point cloud. Each point of the point cloud or each point detection 104 of the plurality of point detections 104 may include a coordinate vector 118 and a point feature vector 110. The coordinate vector 118 may indicate a location in space of the respective point detection 104 in a vehicle coordinate system. The point feature vector 110 may be a vector of learned or measured features of the respective point detection 104.

The first feature grid 114, also called a primary feature grid, may be generated or determined by a CNN with any number of layers from some rasterized representation of the most recent sensor data 108 from the sensor 106 at the present point of time. The most recent sensor data 108 may be captured from a scan of the vehicle's surroundings at the present point of time by the sensor 106 and may include raw sensor data, such as radar data. If the CNN itself has recurrent components, the first feature grid 114 may already be enriched with past information of the point features.

The second feature grid 116, also called a hidden state grid or a recurrent hidden state of the layer 100, may be generated or determined by the CNN from some rasterized representation of the second most recent sensor data 108 from the sensor 106. For example, the second most recent sensor data 108 may be captured from a previous scan of the vehicle's surroundings at the previous point of time by the sensor 106 and may include raw sensor data, such as radar data. The previous point of time may be a point of time directly before the present point of time. There may be no point of time between the previous point of time and the present point of time. The second feature grid 116 may include information from even further sensor scans in the past.

The preliminary scene flow 112 may include a displacement vector for each point detection 104 of the plurality of point detections 104. The preliminary scene flow 112 may be a current estimate of a movement of the respective point detection 104 from a previous point of time to a present point of time. If the vehicle is equipped with odometry sensors, the displacement vector may be calculated for each point detection 104 that is induced by the vehicle's own motion. This may be a decent initial guess for the preliminary scene flow 112 and may thus be the input for a first instance of the layer 100. If no odometry information is available, a next best initial guess for the preliminary scene flow 112 may be a displacement vector having only zero values.

The method for scene flow estimation may use all input parameters of the layer 100 to determine the scene flow 102 for each point detection 104 of the plurality of point detections 104. In particular, the method may include a step of determining the plurality of point detections 104 at a present point of time based on the sensor data 108 captured from the sensor 106 at the present point of time. Each point detection of the plurality of point detections includes a coordinate vector and a point feature vector 110. The plurality of point detections 104 may originate from the current scan of the sensor 106 at the present point of time. The plurality of point detections 104 may be spatially aligned with the first feature grid 114.

It will be understood, however, that the plurality of point detections 104 is not spatially aligned with the second feature grid 116. Even though the first feature grid 114 and the second feature grid 116 may possess the same size and resolution, the first feature grid 114 and the second feature grid 116 originate from different points of time and are therefore spatially misaligned. There may be two sources for this misalignment. First, the sensor data 108 and thus, the feature grids 114, 116 may reside in a vehicle-centric coordinate system. If the vehicle has moved between the two most recent scans of the sensor 106, i.e. between the previous scan and the current scan, cells of the two feature grids 114, 116 therefore correspond to different locations in a world-centric coordinate system. Thus, the cells of the first feature grid 114 derived at the present point of time are not aligned with the cells of the second feature grid 116 derived at the previous point of time. Second, the first feature grid 114 and the second feature grid 116 may contain information relating to moving objects in the environment of the vehicle. A respective position of the moving objects may therefore change in the world-centric coordinate system from the previous point of time to the present point of time even if the vehicle itself has not moved between the two most recent scans of the sensor 106.

The method may further include a step of sampling a first point feature grid vector 120 for each point detection 104 of the plurality of point detections 104 based on the first feature grid 114. The first feature grid 114 may include point features of each point detection 104 of the plurality of point detections 104 at the present point of time. The respective first point feature grid vector 120 for the respective point detection 104 may be sampled based on the coordinate vector 118 of the respective point detection 104 and the first feature grid 114 of one point feature of the plurality of point features of the respective point detection 104.

The first point feature grid vector 120 may describe a vector to a cell of the first feature grid 114, wherein the cell is derived based on the coordinate vector 118 of the respective point detection 104 and the respective point feature of the plurality of point features of the respective point detection 104. The first point feature grid vector 120 may be sampled using a first gather operation 132 of the layer 100.

The method for scene flow estimation may further include a step of determining a first offset vector (not shown in Fig. 1) for each point detection 104 of the plurality of point detections 104 based on the first point feature grid vector 120. The respective first offset vector may be determined by adding a first offset between a sampled grid cell center of the first point feature grid vector 120 and the coordinate vector 118 of the respective point detection 104 to the first point feature grid vector 120 of each respective point detection 104 of the plurality of point detections 104.

The scene flow 102 may generally be understood as a motion of each point detection 104 forward in time, i.e. a movement of each point detection from the previous point of time to the present point of time. However, the scene flow 102 may also describe a backward motion of each point detection 104 by an additive inverse of the motion forward in time.

Thus, in one further step of the method for estimating the scene flow 102, a previous point detection 124 may be estimated for each point detection 104 of the plurality of point detections 104. The respective previous point detection 124 may include an estimated coordinate vector 126 for each respective point detection 104 of the plurality of point detections 104 at the previous point in time. The estimated coordinate vector 126 may describe a position, also called a warped position, of the corresponding point detection 104 at the previous point of time in the vehicle-centric coordinate system.

The previous point detection 124 may be determined using the preliminary scene flow 112. In particular, the previous point detection 124 of each point detection 104 may be determined by subtracting the respective preliminary scene flow 112 of the respective point detection 104 at the present point of time from the coordinate vector 118 of the respective point detection 104 at the present point of time. A resulting point cloud of a plurality of previous point detections 124 may be aligned with the second feature grid 116, that may also be called a hidden state grid. An accuracy of the alignment may depend on the quality of the preliminary scene flow 112.

The method may further include a step of sampling a second point feature grid vector 130 for each previous point detection 124 based on the second feature grid 116. The second feature grid 116 may include point features of each previous point detection 124 at the previous point of time.

The respective second point feature grid vector 130 for each of the previous point detections 124 may be sampled based on the estimated coordinate vector 126 of the respective previous point detection 124 and the second feature grid 116. In particular, the respective second point feature grid vector 130 may be sampled based on the second feature grid 116 of the one selected point feature of the respective point detection 104. The first feature grid 114 and the second feature grid 116 may therefore be based on the same point feature of the respective point detection 104.

The second point feature grid vector 130 may describe a vector to a cell of the second feature grid 116, wherein the cell is derived based on the estimated coordinate vector 126 of the respective previous point detection 124 and the respective point feature of the respective point detection 104. The second point feature grid vector 130 may be sampled using the second gather operation 134 of the layer 100.

When the preliminary scene flow 112 that is used to determine the previous point detections 124 is inaccurate, a second gather operation 134 may sample a wrong cell from the second feature grid 116 for a previous point detection 124. Since the second feature grid 116 may be a result of several convolutional network layers, the second point feature grid vector 130 that is sampled in that case may contain information about the grid cell's neighborhood. That information, when viewed in the context of the first point feature grid vector 120 sampled from the first feature grid 114 using the first gather operation 132, may be sufficient to give an indication how the preliminary scene flow 112 needs to be adjusted to rectify or reduce the mistake.

The method for scene flow estimation may further include a step of determining a second offset vector (not shown in Fig. 1) for each previous point detection 124 based on the second point feature grid vector 130. The respective second offset vector of the respective previous point detection 124 may be determined by adding a second offset between a sampled grid cell center of the second point feature grid vector 130 and the estimated coordinate vector 126 of the previous point detection 124 to the second point feature grid vector 130 of each previous point detection 124 of the plurality of point detections 104.

A fused point feature vector 128 may be determined for each point detection 104 of the plurality of point detections 104 based on the point feature vector 110, the first point feature grid vector 120 of the respective point detection 104 and the second point feature grid vector 130 of the respective previous point detection 124. The point feature vector 110, the first point feature grid vector 120 and the second point feature grid vector 130 may be fused by using at least one small multi-layer perceptron 122 applied separately to each point detection 104. The fusing may be performed or carried out in multiple steps. For example, the point feature vector 110 and the first point feature grid vector 120 may first be fused using a first multi-layer perceptron 122 to determine a fused intermediate point feature vector. The fused point feature vector 128 may then be determined as an output of a second multi-layer perceptron 122 with the fused intermediate point feature vector and the second point feature grid vector 130 as input, as shown in Fig. 1. It is understood that the fused point feature vector 128 for each point detection 104 of the plurality of point detections 104 may also be determined by a single multi-layer perceptron 122 with the point feature vector 110, the first point feature grid vector 120 of the respective point detection 104 and the second point feature grid vector 130 of the respective previous point detection 124 as input and the fused point feature vector 128 for each point detection 104 of the plurality of point detections 104 as output.

Furthermore, the fused point feature vector 128 for each point detection 104 of the plurality of point detections 104 may also be determined based on the point feature vector 110, the first offset vector instead of the first point feature grid vector 120 and the second offset vector instead of the second point feature grid vector 130.

As shown in Fig. 1, the layer 100 may have three output parameters: the fused point feature vector 128, an updated second feature grid 136, and the scene flow 102.

The fused point feature vector 128 for each point detection 104 of the plurality of point detections 104 determined by fusing the point feature vector 110, the first point feature grid vector 120 of the respective point detection 104 and the second point feature grid vector 130 of the respective previous point detection 124 may be input as a point feature vector to further instances of the proposed layer 100 or other point-level neural network layers.

The updated second feature grid 136 may be determined by embedding the fused point feature vector 128 of each point detection 104 into the first feature grid 114 using the coordinate vector 118 of each respective point detection 104 of the plurality of point detections 104. The fused point feature vector 128 may be embedded into the first feature grid 114 by a scatter operation 138. One cell of the updated second feature grid 136 may assign one or more feature vectors: the first point feature grid vector 120, i.e. its original feature vector, and any number of feature vectors from point detections 104 whose positions lie within the boundaries of the respective grid cell.

These feature vectors, in particular the respective embedded fused point feature vector and the first point feature grid vector 120 of the respective point detection 104 may be compressed into a compressed feature vector for each point detection 104 of the plurality of point detections 104 using a symmetric reduction function. The symmetric reduction function may include an element-wise addition of the respective embedded fused point feature vector and the first point feature grid vector 120 or a maximum determination of the respective embedded fused point feature vector and the first point feature grid vector 120. Based on the plurality of compressed feature vectors of the plurality of point detections 104, the updated second feature grid 136 may be determined.

The updated second feature grid 136 may then be processed using a small convolutional subnetwork 140, so that the results of the "scatter" operation, i.e. embedding the fused point feature vector 128 into the first feature grid 114, may spatially smoothed out. The updated second feature grid 136 may be input to further convolutional layers of the CNN and/or further instances of the proposed layer 100. The updated second feature grid 136 may be the new recurrent hidden state of the layer 100 at a next point of time. Thus, the updated second feature grid 136 may be the second feature grid 116 as input parameter of the layer 100 at the next point of time.

Finally, as an output of the layer 100, the scene flow 102 may be determined for each point detection 104 of the plurality of point detections 104 based on the respective fused point feature vector 128. The scene flow 102 may describe the movement of each respective point detection 104 from a position at the previous point of time to a position at the present point of time. The scene flow 102 may be determined using a neural network layer, for example, a small multi-layer perceptron 142 applied separately to each point detection 104. The fused point feature vector 128 may be input to the multi-layer perceptron 142. The scene flow 102 may be determined based on an output of the multi-layer perceptron 142 and the preliminary scene flow 112. The preliminary scene flow 112 may be a scene flow determined at the previous point of time. The determination or estimation of the scene flow 102 may be trained using scene flow estimation losses. The new scene flow 102 may be input to further instances of the proposed layer 100 as the preliminary scene flow 112.

The layer 100 may estimate or determine the scene flow 102 as frame-to-frame displacement vectors on point detection level. This may be converted to a speed-over-ground determination on point-level. Therefore, displacement vectors induced by the vehicle's motion may be subtracted from the determined scene flow 102 of each point detection 104 and then multiplied with a frame-rate.

In an embodiment, these speed-over-ground estimates may further be used to estimate an object-level speed for other road users in the vicinity of the vehicle. When object detections are given in the form of bounding boxes by another system, for example, by an object detection network head attached to the same neural network 200 that determines the scene flow 102 (as shown for example in Fig. 2), it may be possible to determine for each object a set of point detections 104 that lie inside its bounding box or be sufficiently close to the bounding box. The object's speed may then be estimated as the mean of all associated point-level speed estimates.

Fig. 2 shows an example implementation of the proposed layer 100 in a neural network 200. According to an embodiment of the layer 100 in Fig. 1, the following steps of the method for scene flow estimation may be repeated in a loop any number of times: estimating the previous point detection 124 for each point detection 104 of the plurality of point detections 104 at the previous point of time using the preliminary scene flow 112; sampling the second point feature grid vector 130 for each previous point detection 124 based on the second feature grid 116; determining the fused point feature vector 128 for each point detection 104 of the plurality of point detections 104 based on the point feature vector 110, the first point feature grid vector 120 of the respective point detection 104 and the second point feature grid vector 130 of the respective previous point detection 124; and determining the scene flow 102 for each point detection 104 of the plurality of point detections 104 based on the respective fused point feature vector 128.

Thus, the second feature grid 116 or the hidden state grid may be sampled that many times using different preliminary scene flows 112. The information contained in the second feature grid 116 may therefore be better utilized with this denser sampling.

Furthermore, one instance of the layer 100 may thereby be performed or carried out multiple times to refine the scene flow 102, thus, reducing the total number of required instances and therefore improving the efficiency of the neural network 200.

In practice, the process may be iterated a select number of times, providing an ever finer scene flow 102 for each point detection 104 of the plurality of point detections 104 starting from a course initial guess. The resulting scene flow 102 or the displacement vector for each point detection 104 may be trained using standard losses for scene flow estimation, such as various self-supervised losses and classically supervised losses with labels derived from an auxiliary sensor, for example, a radar sensor or a lidar sensor.

According to an embodiment of a possible neural network architecture that may incorporate the layer 100, the neural network 200 may be a convolutional neural network (CNN), in particular a convolutional feature pyramid network. The neural network 200 may include a down-sampling portion 202 that successively halves a resolution 204, 206, 208 of the first feature grid 114 in several down-sampling stages 210, 212. The neural network 200 may further include an up-sampling portion 214 that successively doubles the resolution 216, 218, 220 of the first feature grid 114 in several up-sampling stages 222, 224 until some desired resolution is reached. The desired resolution may be the original input resolution of the first feature grid 114. However, the desired resolution may be even higher than the input resolution to obtain a finer-grained scene flow 102.

The layer 100 described in Fig. 1 may be inserted into the up-sampling portion 214 of the neural network 200 as shown in Fig. 2. Same reference signs are used for same features in Fig. 1 and Fig. 2. The scene flow 102 may therefore be determined based on a series of first feature grids 114-1, 114-2, 114-3 that increase in resolution 216, 218, 220. The lower resolution of the first feature grid 114-1 at the beginning of the scene flow estimation may make it easier to find a rough initial correspondence between cells of the first feature grid 114-1 and the second feature grid 116, that may be refined by the later layers using higher resolution first feature grids 114-2, 114-3. The scene flow estimation therefore may proceed in a coarse-to-fine strategy.

In particular, the neural network 200 including the layer 100 for scene flow estimation may be trained end-to-end. The neural network 200 for determining the feature grids 114, 116, the layer 100 for estimating the scene flow 102 and further neural networks, for example an additional object detection head of the neural network 200, may be trained together. This may enable an operation of the scene flow estimation in an object detection system with less computational overhead.

A training data set for training the neural network 200 including the layer 100 may include input data and corresponding known output data. The input data may include a point cloud, for example determined by radar data, that represents objects at a first point of time. The known output data may be a corresponding point cloud at a second point of time, wherein the second point of time is after the first point of time. The training data set may also be based on images of moving objects captured by a camera. The input data may include an image at the first point of time including a plurality of pixels. The known output data may be a corresponding image including the plurality of pixels at the second point of time. The plurality of pixels may represent moving objects, wherein a position of the pixels may change from the first point of time and the second point of time.

The training input data may be the input parameter of the point detections 104 to the layer 100 or input to the neural network 200. The layer 100 or the neural network 200 may generate a result based on the training input data which may then be compared with the known output data. Based on the result, parameters of the layer 100 or the neural network 200 may be adjusted.

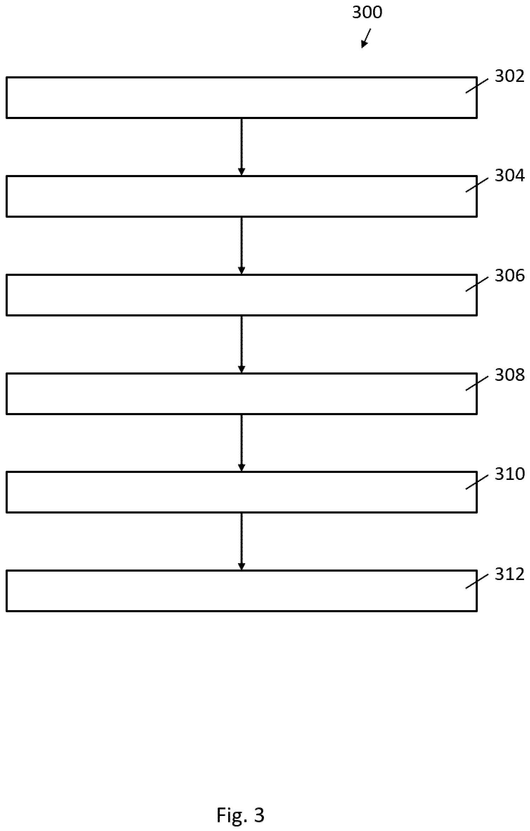

Fig. 3 shows a flow diagram 300 illustrating a method for scene flow estimation according to various embodiments. At 302, a plurality of point detections may be determined at a present point of time based on sensor data from a sensor. At 304, a first point feature grid vector may be sampled for each point detection of the plurality of point detections based on a first feature grid. At 306, a previous point detection may be estimated for each point detection of the plurality of point detections at a previous point of time using a preliminary scene flow. At 308, a second point feature grid vector may be sampled for each previous point detection based on a second feature grid. At 310, a fused point feature vector may be determined for each point detection of the plurality of point detections based on the point feature vector, the first point feature grid vector of the respective point detection and the second point feature grid vector of the respective previous point detection. At 312, a scene flow may be determined for each point detection of the plurality of point detections based on the respective fused point feature vector.

According to an embodiment, the first feature grid may include point features extracted from the sensor data of the sensor at the present point of time.

According to an embodiment, the second feature grid may include point features of each previous point detection at the previous point of time.

According to an embodiment, the respective first point feature grid vector for the respective point detection may be sampled based on the coordinate vector of the respective point detection and the first feature grid of one point feature of the plurality of point features of the respective point detection.

According to an embodiment, the method may further include determining the first feature grid based on the sensor data from the sensor captured at the present point of time using a neural network.

According to an embodiment, the method may further include determining the second feature grid at the previous point of time based on the sensor data from the sensor captured at the previous point of time using the neural network.

According to an embodiment, the method may further include determining a first offset vector for each point detection of the plurality of point detections based on the first point feature grid vector.

According to an embodiment, the method may further include determining a second offset vector for each previous point detection based on the second point feature grid vector.

According to an embodiment, the respective first offset vector of the respective point detection may be determined by adding a first offset to the first point feature grid vector of each respective point detection of the plurality of point detections.

According to an embodiment, the respective previous point detection may include an estimated coordinate vector of each respective point detection of the plurality of point detections at the previous point in time.

According to an embodiment, the respective second point feature grid vector for each of the previous point detections may be sampled based on the estimated coordinate vector of the respective previous point detection and the second feature grid.

According to an embodiment, the respective second offset vector of the respective previous point detection may be determined by adding a second offset to the second point feature grid vector of each previous point detection of the plurality of point detections.

According to an embodiment, the preliminary scene flow may include a displacement vector for each point detection of the plurality of point detections.

According to an embodiment, the method may further include embedding the respective fused point feature vector of each point detection into the first feature grid using the coordinate vector of each respective point detection of the plurality of point detections, and compressing the respective embedded fused point feature vector and the first point feature grid vector of the respective point detection into a compressed feature vector using a symmetric reduction function for each point detection of the plurality of point detections.

According to an embodiment, the method may further include determining an updated second feature grid based on a plurality of the compressed feature vectors.

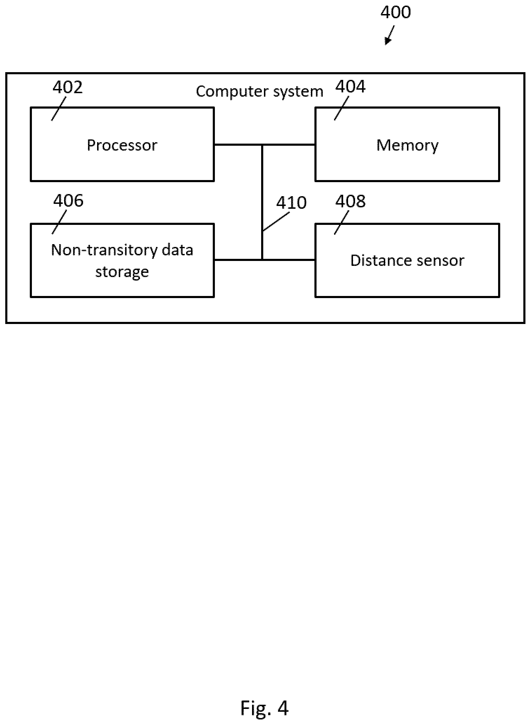

Each of the steps 302, 304, 306, 308, 310, 312 and the further steps described above may be performed by computer hardware components, for example as described with reference to Fig. 4.

Fig. 4 shows a computer system 400 with a plurality of computer hardware components configured to carry out steps of a computer implemented method for scene flow estimation according to various embodiments. The computer system 400 may include a processor 402, a memory 404, and a non-transitory data storage 406. A distance sensor 408 (for example a radar sensor or a LIDAR sensor) may be provided as part of the computer system 400 (like illustrated in Fig. 4), or may be provided external to the computer system 400.

The processor 402 may carry out instructions provided in the memory 404. The non-transitory data storage 406 may store a computer program, including the instructions that may be transferred to the memory 404 and then executed by the processor 402. The distance sensor 408 may be used to determine input data, for example sensor data that is provided to determine a plurality of point detections using a flow layer as described herein.

The processor 402, the memory 404, and the non-transitory data storage 406 may be coupled with each other, e.g. via an electrical connection 410, such as e.g. a cable or a computer bus or via any other suitable electrical connection to exchange electrical signals. The distance sensor 408 may be coupled to the computer system 400, for example via an external interface, or may be provided as parts of the computer system (in other words: internal to the computer system, for example coupled via the electrical connection 410).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 400.

### Reference numeral list

- 100: layer
- 102: scene flow
- 104: point detection
- 106: sensor
- 108: sensor data
- 110: point feature vector
- 112: preliminary scene flow
- 114: first feature grid
- 114-1: first feature grid
- 114-2: first feature grid
- 114-3: first feature grid
- 116: second feature grid
- 118: coordinate vector
- 120: first point feature grid vector
- 122: multi-layer perceptron
- 124: previous point detection
- 126: estimated coordinate vector
- 128: fused point feature vector
- 130: second point feature grid vector
- 132: gather operation
- 134: gather operation
- 136: updated second feature grid
- 138: scatter operation
- 140: convolutional subnetwork
- 142: multi-layer perceptron

- 200: neural network
- 202: down-sampling portion
- 204: feature grid resolution
- 206: feature grid resolution
- 208: feature grid resolution
- 210: down-sampling stage
- 212: down-sampling stage
- 214: up-sampling portion
- 216: feature grid resolution
- 218: feature grid resolution
- 220: feature grid resolution
- 222: up-sampling stage
- 224: up-sampling stage

- 300: flow diagram illustrating a method for scene flow estimation according to various embodiments
- 302: step of determining a plurality of point detections at a present point of time
- 304: step of sampling a first point feature grid vector for each point detection
- 306: step of estimating a previous point detection for each point detection
- 308: step of sampling a second point feature grid vector for each previous point detection
- 310: step of determining a fused point feature vector for each point detection
- 312: step of determining a scene flow for each point detection

- 400: computer system according to various embodiments
- 402: processor
- 404: memory
- 406: non-transitory data storage
- 408: distance sensor
- 410: connection

## Claims

1. Computer implemented method for scene flow estimation, the method comprising the following steps carried out by computer hardware components:
determining (302) a plurality of point detections (104) at a present point of time based on sensor data (108) from a sensor (106), each of the point detections (104) comprising a coordinate vector (118) and a point feature vector (110);
sampling (304) a first point feature grid vector (120) for each point detection (104) of the plurality of point detections (104) based on a first feature grid (114);
estimating (306) a previous point detection (124) for each point detection (104) of the plurality of point detections (104) at a previous point of time using a preliminary scene flow (112);
sampling (308) a second point feature grid vector (130) for each previous point detection (124) based on a second feature grid (116);
determining (310) a fused point feature vector (128) for each point detection (104) of the plurality of point detections (104) based on the point feature vector (110), the first point feature grid vector (120) of the respective point detection (104) and the second point feature grid vector (130) of the respective previous point detection (124); and
determining (312) a scene flow (102) for each point detection (104) of the plurality of point detections (104) based on the respective fused point feature vector (128).

2. The method of claim 1,
wherein the first feature grid (114) comprises point features extracted from the sensor data (108) of the sensor (106) at the present point of time; and wherein the second feature grid (116) comprises point features of each previous point detection (124) at the previous point of time.

3. The method of at least one of claims 1 or 2,
wherein the respective first point feature grid vector (120) for the respective point detection (104) is sampled based on the coordinate vector (118) of the respective point detection (104) and the first feature grid (114) of one point feature of the respective point detection (104).

4. The method of at least one of claims 1 to 3, further comprising
determining the first feature grid (114) based on the sensor data (108) from the sensor (106) captured at the present point of time using a neural network; and
determining the second feature grid (116) at the previous point of time based on the sensor data (108) from the sensor (106) captured at the previous point of time using the neural network.

5. The method of at least one of claims 1 to 4, further comprising
determining a first offset vector for each point detection (104) of the plurality of point detections (104) based on the first point feature grid vector (120); and
determining a second offset vector for each previous point detection (124) based on the second point feature grid vector (130);

6. The method of claim 5,
wherein the respective first offset vector of the respective point detection (104) is determined by adding a first offset to the first point feature grid vector (120) of each respective point detection (104) of the plurality of point detections (104).

7. The method of at least one of claims 1 to 6,
wherein the respective previous point detection (124) comprises an estimated coordinate vector (126) for each respective point detection (124) of the plurality of point detections (104) at the previous point in time.

8. The method of claim 7,
wherein the respective second point feature grid vector (130) for each of the previous point detections (124) is sampled based on the estimated coordinate vector (126) of the respective previous point detection (124) and the second feature grid (116).

9. The method of at least one of claims 5 to 8,
wherein the respective second offset vector of the respective previous point detection (124) is determined by adding a second offset to the second point feature grid vector (130) of each previous point detection (124) of the plurality of point detections (104).

10. The method of at least one of claims 1 to 9,
wherein the preliminary scene flow (112) comprises a displacement vector for each point detection (104) of the plurality of point detections (104).

11. The method of at least one of claims 1 to 10, further comprising
embedding the respective fused point feature vector (128) of each point detection (104) into the first feature grid (114) using the coordinate vector (118) of each respective point detection (104) of the plurality of point detections (104); and
compressing the respective embedded fused point feature vector and the first point feature grid vector (120) of the respective point detection (104) into a compressed feature vector using a symmetric reduction function for each point detection (104) of the plurality of point detections (104).

12. The method of claim 11, further comprising
determining an updated second feature grid (136) based on a plurality of the compressed feature vectors.

13. Computer system, the computer system comprising a plurality of computer hardware components configured to carry out steps of the computer implemented method of at least one of claims 1 to 12.

14. Vehicle, comprising the computer system of claim 13 and the sensor (106).

15. Non-transitory computer readable medium comprising instructions which, when executed by a computer, cause the computer to carry out the computer implemented method of at least one of claims 1 to 12.
